# FASCICULE DE BREVET EUROPEEN

(11) **EP 2 121 386 B1**
(45) Date de publication et mention de la délivrance du brevet: **19.01.2011**
(21) Numéro de dépôt: 08775566.6
(22) Date de dépôt: 18.02.2008
(51) Int. Cl.: B60R 16/02, B60R 16/08

(54) **DISPOSITIF DE MONTAGE D'EQUIPEMENTS NON DIMENSIONNANTS SUR UNE OSSATAURE STRUCTURELLE D'UN VEHICULE, VEHICULE EQUIPE D'UN TEL DISPOSITIF ET PROCEDE DE MONTAGE**
VORRICHTUNG ZUR MONTAGE EINES DIMENSIONSLOSEN ELEMENTS AUF DEM FAHRGESTELL EINES FAHRZEUGES, DAMIT AUSGESTATTETES FAHRZEUG UND MONTAGEVERFAHREN
DEVICE FOR MOUNTING NON-DIMENSIONING EQUIPMENT ON THE STRUCTURAL FRAME OF A VEHICLE, VEHICLE FITTED WITH SUCH DEVICE AND MOUNTING METHOD

(30) Priorité: 21.02.2007 FR 0701231
(43) Date de publication de la demande: 25.11.2009
(73) Titulaire: Sogeclair, 7 avenue Albert Durand 31700 Blagnac (FR)
(72) Inventeur: GIAVARINI, Jean-Paul, F-31620 Castelnau d'Estretefonds (FR)
(74) Mandataire: Cabinet BARRE LAFORGUE & associés
(86) Numéro de dépôt international: PCT/FR2008/000208
(87) Numéro de publication internationale: WO 2008/125752

(56) Documents cités:
- EP-A- 1 731 373
- US-A- 5 794 979
- US-A1- 2003 188 903
- US-A1- 2004 079 569

## Description

L'invention concerne un dispositif de montage d'équipements non dimensionnants -notamment d'équipements électriques, hydrauliques, pneumatiques, etc.- sur une ossature structurelle d'un véhicule -aéronef, train à grande vitesse, sous-marin, etc.-.

Le document US2003/188903A décrit un dispositif de montage d'équipements électriques, une batterie, sur une ossature structurelle d'un véhicule, ledit dispositif comprenant:
- une pluralité d'attaches d'au moins un équipement électrique, chaque attache étant adaptée pour recevoir et maintenir au moins une portion d'un équipement électrique,
- une ossature intermédiaire rigide comprenant une pluralité de sites d'assemblage rigide d'au moins une attache à cette ossature intermédiaire,
- une pluralité de brides de fixation rigide de ladite ossature intermédiaire sur ladite ossature structurelle du véhicule, chaque bride de fixation étant ancrée rigidement sur l'ossature structurelle et recevant au moins une portion d'ossature intermédiaire et la maintenant rigidement de manière à empêcher tout déplacement intempestif de cette portion d'ossature intermédiaire par rapport à l'ossature structurelle.

De nombreux véhicules, notamment des véhicules motorisés, sont construits à partir d'une structure rigide formée d'organes rigides tels que des poutres (longerons, nervures, traverses, montants, etc.), poutrelles, raidisseurs, arceaux, cadres, lisses, plaques, portions de coques ou coquilles assemblées les unes aux autres, etc., qui définit la forme générale du véhicule. Cette structure est adaptée pour résister aux contraintes auxquelles le véhicule peut être soumis et pour porter ses différents organes fonctionnels utilitaires (motorisation, servitudes, commandes, charges utiles, emports, accessoires, etc.).

Dans tout le texte, cette structure est désignée par « ossature structurelle ». Une telle ossature structurelle est nommée différemment selon le type de véhicule ; il s'agit du châssis d'un véhicule routier ou ferroviaire, de la cellule d'un aéronef, de la coque d'un bateau, etc.

Un véhicule motorisé est par ailleurs doté d'au moins un réseau de distribution d'énergie et/ou de fluide(s) formé d'équipements divers (câbles, tubes, tuyaux, gaines, supports d'attache, commutateurs, renvois, distributeurs, etc.) qui doivent être solidarisés à l'ossature structurelle.

Les ossatures structurelles d'un grand nombre de véhicules, notamment des véhicules motorisés, et plus particulièrement les cellules d'aéronefs et les châssis de trains à grande vitesse, sont optimisées en terme de poids et de résistance mécanique -notamment en fatigue-. Cette optimisation des ossatures consiste à déterminer le meilleur compromis poids/résistance de manière à optimiser les performances, à limiter les consommations d'énergie lors de l'utilisation du véhicule, tout en assurant une résistance suffisante pouvant supporter les différents efforts que peut subir le véhicule en service.

Le dimensionnement d'une ossature structurelle d'un véhicule prend en compte les charges critiques du véhicule qu'elle est destinée à recevoir, c'est à dire les charges dont les poids et forces qu'elles exercent sur l'ossature structurelle déterminent la définition et le dimensionnement de l'ossature structurelle. Il s'agit par exemple, pour un aéronef, des moteurs, du train d'atterrissage, de la masse et de la répartition de masse des emports (passagers, fret), etc.

En revanche, la définition et le dimensionnement d'une ossature structurelle ne prennent pas en compte les charges non critiques, c'est-à-dire les charges dont les impacts sont négligeables dans le cadre de la définition et du dimensionnement de l'ossature structurelle. Certaines de ces charges non critiques sont dus à des équipements, désignés dans tout le texte par l'expression « équipements non dimensionnants ». Il s'agit en particulier des équipements des réseaux (câbles électriques, conduites d'air, etc.).

Les usinages tels que les perçages réalisés dans une ossature structurelle de véhicule destinés à permettre le support d'équipements, y compris d'équipements non dimensionnants, sont de nature à modifier les propriétés mécaniques de l'ossature structurelle.

Ainsi, lors de la définition et du dimensionnement d'une ossature structurelle d'un véhicule, il convient de prendre en compte les usinages notamment les perçages- destinés à recevoir des supports d'équipements, y compris des supports d'équipements non dimensionnants pour cette ossature structurelle.

Il en résulte qu'une ossature structurelle est optimisée pour une configuration donnée des équipements, y compris les équipements non dimensionnants devant être associés à cette ossature structurelle.

Autrement dit, chaque ossature structurelle est conçue pour recevoir un ensemble d'équipements prédéterminés. Toute modification de configuration impose une modification de l'ossature structurelle du véhicule, rendant problématique l'industrialisation à moindre coût des ossatures structurelle de véhicule.

Par exemple, dans le domaine de l'aéronautique, chaque compagnie aérienne possède ses propres exigences en termes d'équipements électriques. Or, l'agencement du système électrique d'un aéronef requis par une compagnie aérienne n'est pas nécessairement compatible avec l'agencement du système électrique requis par une autre compagnie aérienne. De plus, l'agencement du système électrique requis par une compagnie aérienne peut imposer certaines caractéristiques de l'ossature structurelle de l'aéronef qui ne permettent pas l'agencement du système électrique requis par une autre compagnie aérienne.

Dès lors, chaque configuration d'équipements, y compris d'équipements non dimensionnants pour une cellule d'aéronef, impose d'adapter la structure de la cellule de l'aéronef à cette configuration, en ménageant des usinages adaptés pour permettre la fixation de ces équipements.

De nos jours, le processus de fabrication d'un véhicule, et plus particulièrement d'un aéronef, prend naissance dans un bureau d'études par la mise au point d'une ou plusieurs maquette(s) virtuelle(s) pour se terminer sur les sites d'assemblage. Une maquette virtuelle définit les usinages nécessaires aux montages des équipements prédéterminés. Ce montage est ensuite réalisé sur les sites d'assemblage. Toute modification de configuration des équipements nécessite une redéfinition de la maquette virtuelle, c'est-à-dire impose un retour à la conception de l'ossature structurelle au niveau de la maquette virtuelle. Or une telle modification peut intervenir à un stade très avancé du processus de fabrication, notamment au moment du montage en atelier, ce qui peut conduire à une perte de temps considérable. Il en résulte une augmentation sensible du coût de conception de l'aéronef.

Cet inconvénient est exacerbé par la multiplication des systèmes de récréation à bords des avions des lignes commerciales. En particulier, cette multiplication entraîne un accroissement du nombre d'équipements électriques, tels que des câbles, des supports d'attache, des disjoncteurs, etc., à loger dans l'avion. Or, chaque équipement doit être relié rigidement -directement ou indirectement à la cellule de l'aéronef de manière à ce que dernier suive le mouvement de l'aéronef. Cela impose de ménager des points de fixation dans la cellule du véhicule qui puissent recevoir l'équipement ou un support d'équipement. Or, comme indiqué précédemment, les usinages à réaliser pour fixer un équipement conduisent à une modification des propriétés mécaniques de l'appareil, ce qui n'est pas toujours acceptable.

Il en résulte que toute modification des spécifications au cours de la fabrication d'un aéronef, y compris des modifications liées à des équipements non dimensionnants, tels que le système électrique ou le système de conditionnement d'air, conduit à des remises en cause majeures de l'aéronef.

L'invention vise à pallier cet inconvénient et à proposer un dispositif de montage, par rapport à l'ossature structurelle du véhicule, d'équipements non dimensionnants, (c'est-à-dire d'équipements dont les poids ne sont pas pris en compte lors de la conception de l'ossature structurelle du véhicule) qui permet de réaliser tout type de configuration, à partir d'une même ossature structurelle de véhicule, sans nécessiter une modification -notamment ni usinages, ni renforcements- de l'ossature structurelle du véhicule.

L'invention vise en particulier à proposer un dispositif de montage d'équipements d'au moins un réseau, tel qu'un réseau électrique, un réseau pneumatique, un réseau hydraulique, sur l'ossature structurelle d'un véhicule, qui permet de pallier les problèmes susmentionnés.

L'invention vise également à proposer un dispositif de montage d'équipements qui permet de modifier l'agencement des équipements sur l'ossature d'un véhicule, sans nécessiter de modification de l'ossature structurelle.

L'invention vise également à proposer un dispositif de montage d'équipements modulable.

L'invention vise également à proposer un dispositif de montage d'équipements économique.

L'invention vise également à proposer un dispositif de montage d'équipements dont l'installation sur l'ossature d'un véhicule est aisée.

L'invention vise également à proposer un véhicule comprenant une ossature structurelle équipée d'un dispositif de montage selon l'invention.

L'invention vise également à proposer un procédé de montage d'équipements sur une ossature de véhicule.

Pour ce faire, l'invention concerne un dispositif de montage d'équipements non dimensionnants sur une ossature structurelle d'un véhicule comprenant :
- une pluralité d'attaches d'au moins un équipement non dimensionnant, chaque attache étant adaptée pour recevoir et maintenir au moins une portion d'un équipement non dimensionnant,
caractérisé en ce qu'il comprend :
- une ossature intermédiaire rigide comprenant une pluralité de sites d'assemblage rigide d'au moins un support d'attache à cette ossature intermédiaire,
- une pluralité de supports d'attache portant au moins une attache et comprenant une pince élastique adaptée pour permettre la fixation de ce support d'attache sur ladite ossature intermédiaire en l'un quelconque des sites d'assemblage rigide,
- une pluralité de brides de fixation rigide de ladite ossature intermédiaire sur ladite ossature structurelle du véhicule, chaque bride de fixation étant ancrée rigidement sur l'ossature structurelle et recevant au moins une portion d'ossature intermédiaire et la maintenant rigidement de manière à empêcher tout déplacement intempestif de cette portion d'ossature intermédiaire par rapport à l'ossature structurelle.

Un dispositif de montage selon l'invention permet ainsi de disposer d'une pluralité d'attaches d'équipements réseau portées par une ossature intermédiaire. Chaque attache d'un équipement est portée par un support d'attache, lui-même rigidement assemblé à l'ossature intermédiaire en un site d'assemblage, choisi parmi une pluralité de sites d'assemblage. La flexibilité du montage d'un équipement est liée au nombre de sites d'assemblage distincts disponibles sur l'ossature intermédiaire. Or, selon l'invention, le support d'attache comprend une pince élastique adaptée pour être fixée sur l'ossature intermédiaire en l'un quelconque des sites d'assemblage, ce qui permet de modifier sans difficultés l'agencement des supports d'attache sur l'ossature intermédiaire.

Selon l'art antérieur, les attaches des équipements non dimensionnants, notamment des équipements d'un réseau, sont directement portés par des brides fixées sur l'ossature structurelle.

Selon l'invention, les brides de fixation ancrées sur l'ossature structurelle portent une ossature intermédiaire qui comprend une pluralité de sites d'assemblage permettant la fixation d'un équipement. Dès lors, à un point de fixation de l'art antérieur peut correspondre un ensemble de sites d'assemblage selon l'invention.

Un dispositif de montage selon l'invention fournit une ossature intermédiaire qui vient dédoubler une partie de l'ossature structurelle du véhicule, ce qui peut, à première vue, être considéré comme une surcharge supplémentaire. En réalité, les inventeurs ont constaté que l'augmentation de la masse induite par un dispositif de montage selon l'invention est compensée par l'allègement de l'ossature structurelle, cette dernière pouvant être dimensionnée au plus juste en fonction des charges critiques et ne nécessitant plus, notamment, ni un surdimensionnement, ni un renforcement de l'ossature structurelle pour permettre la réalisation d'usinages, notamment de perçages.

Un dispositif de montage selon l'invention élimine tous les besoins d'usinages supplémentaires non initialement prévus sur l'ossature structurelle du véhicule lors de sa conception. Dès lors, l'ossature structurelle du véhicule conserve ses spécifications d'origine, notamment en termes de résistance, mais permet de monter divers équipements et présente donc une grande souplesse lors du montage en atelier. Ainsi, un dispositif de montage selon l'invention permet, en atelier, de s'adapter à des contraintes pratiques non prises en compte lors de la conception de l'ossature structurelle, notamment dans le cas d'une conception par maquette virtuelle.

Un dispositif de montage selon l'invention permet aussi une personnalisation tardive du véhicule qui ne nécessite par une remise en cause des calculs de structure.

Dans le cas d'applications aéronautiques, un dispositif de montage selon l'invention offre la possibilité à un constructeur d'adapter les fonctionnalités électriques, hydrauliques et pneumatiques aux souhaits et besoins de chaque compagnie aérienne. De plus, il devient dorénavant possible de réutiliser à moindre coût un avion préalablement équipé suivant une première configuration pour une autre application, sans avoir besoin de retoucher à la cellule de l'avion. Il devient également possible de réaffecter à moindre coût un avion initialement prévu pour un client selon une première configuration à un autre client suivant une autre configuration.

En pratique, avantageusement et selon l'invention, une ossature structurelle de véhicule comprend une pluralité de sites de fixation répartis régulièrement sur toute l'ossature structurelle du véhicule, chaque site de fixation étant adapté pour recevoir une bride de fixation rigide de l'ossature intermédiaire sur l'ossature structurelle. Dès lors, l'ossature structurelle du véhicule est conçue et optimisée pour comprendre un ensemble de sites de fixation régulièrement répartis sur toute l'ossature.

La répartition régulière des sites de fixation sur l'ossature structurelle du véhicule permet de réduire notablement l'outillage de perçage nécessaire à la réalisation de ces sites de fixation. En particulier, selon les techniques de l'art antérieur, à chaque configuration des équipements est associé un gabarit de perçage prédéterminé et spécifique à cette configuration. Selon l'invention, un gabarit de perçage est adapté à la réalisation des sites de fixation pour tous types de configurations.

Ces sites de fixation sont formés d'usinage -notamment de perçages ou taraudages- de préférence ménagés dans les zones de moindres contraintes de l'ossature structurelle de manière à minimiser les impacts sur les propriétés mécaniques de la structure.

Lors de l'installation du dispositif de montage sur l'ossature structurelle, le nombre de sites de fixation à utiliser, parmi l'ensemble des sites de fixation disponibles sur l'ossature, et le choix de ces sites sont déterminés et définis en fonction des contraintes de montage des équipements d'un réseau et de la configuration recherchée pour le réseau. Il n'est plus nécessaire de prévoir lors de la conception de l'ossature structurelle du véhicule le nombre de sites de fixation et l'emplacement précis de ces derniers. En effet, l'ossature intermédiaire permet de déporter les points d'assemblage rigide là où ils sont nécessaires.

Un dispositif selon l'invention permet donc une flexibilité de la mise au point et de la mise en place d'équipements non dimensionnants et simplifie grandement l'industrialisation du véhicule. Elle en réduit les délais et les coûts sans nuire à ses performances, voire en les améliorant.

Un dispositif selon l'invention facilite l'installation des équipements non dimensionnants, notamment des équipements de réseau, sur les chaînes d'assemblage ainsi que leur maintenance.

Une ossature intermédiaire selon l'invention peut être formée par divers éléments portés par les brides de fixation et adaptés pour recevoir rigidement des supports d'attache portant des attaches adaptées pour maintenir un équipement Une ossature intermédiaire selon l'invention, peut faire l'objet de divers modes de réalisation. Elle peut comprendre des plaques, des grilles, des planches, des lames, des treillis, des tiges, des tubes, des câbles, des filets, etc. portés par les brides de fixation et s'étendant en regard de l'ossature structurelle selon une ou plusieurs directions.

Avantageusement et selon l'invention, ladite ossature intermédiaire comprend une pluralité de rails de réception desdits supports d'attache, chaque rail de réception étant adapté pour recevoir rigidement, en tout point du rail, au moins un support d'attache.

La combinaison des rails de réception et des supports d'attache à pince élastique permet une fixation de chaque support d'attache en n'importe quel point du rail. Un dispositif selon l'invention présente ainsi une infinité de sites d'assemblage, ce qui permet une infinité de configurations distinctes à partir d'une même ossature structurelle équipée d'une ossature intermédiaire.

Un rail de réception de supports d'attache est une pièce profilée rigide adaptée pour permettre la fixation de supports d'attache sur ce rail.

Un rail est d'une fabrication et d'un maniement aisés, rendant sa commercialisation et son utilisation économiques.

De plus, une ossature intermédiaire comprenant des rails de réception de supports d'attache permet une grande variété de configurations susceptibles de répondre à la plupart des exigences d'installation des équipements non dimensionnants tels que des équipements de réseau.

Une ossature intermédiaire selon l'invention peut comprendre des rails et des pièces de raccords, telles que des bagues ou moyens équivalents pour assurer un raccord rigide entre un rail et une bride de fixation rigide de l'ossature intermédiaire sur l'ossature structurelle.

Néanmoins, avantageusement et selon l'invention, au moins une bride de fixation notamment chaque bride de fixation- comprend des moyens de réception d'au moins une portion d'au moins un rail adaptés pour recevoir ce rail et le maintenir rigidement de manière à empêcher tout déplacement de ce rail par rapport à l'ossature structurelle dudit véhicule.

Selon ce mode de réalisation, chaque bride de fixation ancrée dans l'ossature structurelle du véhicule comprend des moyens de réception d'au moins un rail et est adaptée pour pouvoir directement maintenir rigidement ce rail par rapport à l'ossature structurelle.

Dès lors, la mise en place d'un dispositif de montage selon l'invention est particulièrement aisée. En particulier, dans une première étape, on réalise la fixation des brides de fixation sur l'ossature structurelle ; dans une étape suivante, on réalise l'insertion de rails dans les moyens de réception de rails de ces brides de fixation ; puis, on réalise l'assemblage de supports d'attache sur les rails ; puis on réalise l'ancrage d'attaches dans lesdits supports d'attache ; et dans une étape suivante, on réalise la fixation d'équipements dans lesdites attaches.

Un rail d'une ossature intermédiaire selon l'invention peut présenter diverses formes et dimensions.

Rien n'empêche de prévoir qu'un rail de ladite ossature intermédiaire -notamment que chaque rail de ladite ossature intermédiaire-présente une symétrie de révolution. Un tel rail est en effet facile à insérer dans des brides de fixation par un opérateur humain, ce dernier n'ayant pas à se soucier de l'orientation de ce rail. Cette variante présente cependant l'inconvénient de rendre plus complexe l'obtention d'un blocage en rotation des supports d'attache par rapport au rail autour de son axe longitudinal.

Ainsi, de préférence, avantageusement et selon l'invention, au moins un rail de ladite ossature intermédiaire -notamment chaque rail- est non symétrique de révolution.

Avantageusement et selon l'invention, au moins un rail -notamment chaque rail- présente une section droite transversale dont le contour périphérique présente au moins une portion droite.

Avantageusement et selon l'invention, au moins un rail de ladite ossature intermédiaire -notamment chaque rail de ladite ossature intermédiaire- présente- une section droite transversale dont le contour périphérique est polygonal -notamment carré-.

Un rail formé d'un tube à section droite carrée est particulièrement adapté à la réalisation d'une ossature intermédiaire.

Un rail selon l'invention peut être prévu en un matériau métallique, en un matériau composite carboné ou en un matériau équivalent.

Avantageusement et selon l'invention, ladite ossature intermédiaire comprend en outre des raccords de rails adaptés pour relier rigidement entre eux deux rails adjacents.

Une ossature intermédiaire comprenant des rails et des raccords de rails permet la réalisation d'une grande variété de configurations. De plus, une telle ossature peut être constituée de rails de différentes longueurs selon les zones de l'ossature structurelle à couvrir et selon la distance entre deux brides de fixation. Des raccords de rails permettent également d'associer plusieurs rails bouts à bouts pour s'étendre entre deux brides de fixation.

Les raccords de rails peuvent être choisis dans le groupe formés des raccords de rails droits destinés à relier deux rails de manière coaxiale en prolongement l'un de l'autre ; des raccords de rails à angle droit pour relier deux rails perpendiculairement l'un à l'autre; des raccords de rails obliques permettant d'agencer deux rails l'un par rapport à l'autre selon un angle prédéterminé.

Des raccords de rails selon l'invention permettent également de réaliser une ossature intermédiaire qui s'étend sur plusieurs plans.

Chaque élément de l'ossature intermédiaire est adapté pour recevoir en une infinité de sites d'assemblage, au moins un support d'attache, ce support d'attache étant adapté pour porter au moins une attache d'au moins un équipement non dimensionnant, notamment un équipement réseau.

L'assemblage entre un support d'attache et un élément d'ossature intermédiaire, notamment un rail de réception d'un support d'attache, peut être réalisé par divers moyens d'assemblage rigide, tels que des moyens d'assemblage du type vis écrou, des moyens d'assemblage à tenons et mortaises, des moyens à bague(s) de serrage, des moyens à aimants, des moyens adhésifs, etc.

Les moyens d'assemblage peuvent être des moyens qui nécessitent ou non l'utilisation d'un outil. Avantageusement, ces moyens sont adaptés pour pouvoir permettre l'assemblage d'un support d'attache sur un rail sans l'utilisation d'un outil de manière à faciliter le montage en atelier.

Selon une variante de l'invention, un élément d'ossature intermédiaire, notamment un rail de réception de supports d'attache, peut comprendre, en plus des sites de réception des supports d'attache à pince élastique, un ensemble prédéterminé de sites d'assemblage régulièrement répartis le long de ce rail, tels que des trous destinés à recevoir des vis, ou des mortaises destinées à recevoir un tenon d'un support d'attache, etc. Selon ce mode de réalisation, un support d'attache comprend une vis destinée à venir se loger dans le trou correspondant du rail ou un tenon destiné à coopérer avec une mortaise ménagée dans un rail, etc.

Dans le cas où l'ossature intermédiaire comprend des rails à section droite carrée, avantageusement et selon l'invention, ladite pince élastique d'un support d'attache comprend deux parois élastiquement flexibles, parallèles l'une à l'autre et espacées l'une de l'autre d'une dimension légèrement inférieure à la dimension d'un côté du carré de la section droite transversale de ces rails, de manière à ce que ce support d'attache puisse pincer un rail à section droite transversale carrée en tout point du rail, et empêcher tout déplacement intempestif du support d'attache le long du rail, une fois fixé sur ce dernier.

Un support d'attache comprenant une pince élastique permet de manière simple et rapide de fixer un support d'attache sur un rail ou de déplacer ce support d'attache le long du rail ou de le dissocier du rail. De plus, un rail présentant une section droite carrée adaptée pour recevoir une pince élastique comprenant deux parois parallèles espacées l'une de l'autre d'une dimension légèrement inférieure à la dimension d'un côté de ce carrée, peut recevoir cette pince sur l'un de ses quatre côtés, offrant ainsi une grande variété de possibilités d'assemblage.

Un tel support d'attache peut être formé en tout type de matériau -métallique, composite, polymère, etc.-.

Les dimensions de la pince élastique sont adaptées pour pincer le rail de réception, une fois monté sur le rail. Dès, lors, une fois monté sur le rail, le support d'attache n'est pas susceptible de déplacement intempestif le long du rail ou autour du rail.

Néanmoins, aux fins de garantir qu'un support d'attache selon l'invention ne puisse pas être dissocié du rail de manière intempestive, avantageusement et selon l'invention, au moins un support d'attache -notamment chaque support d'attache- comprend un fermoir de verrouillage adapté pour recouvrir la pince formant ressort de ce support d'attache de sorte que ce support d'attache puisse enserrer entièrement le rail sur lequel il est fixé, interdisant ainsi tout délogement de ce support d'attache du rail.

Selon une variante de l'invention, un support d'attache comprend des moyens d'identification du site d'assemblage de l'ossature intermédiaire où ce support d'attache doit être positionné. Ces moyens d'identification permettent de faciliter le travail d'un opérateur humain qui doit agencer les supports d'attache sur les rails de l'ossature intermédiaire. Ces moyens d'identification du site d'assemblage peuvent être de tous types. Il peut s'agir de moyens d'identification optiques directement lisibles et compréhensibles par un opérateur humain, tels que des coordonnées en (x, y, z) du site d'assemblage ; de moyens optiques codés représentatifs d'un site d'assemblage et adaptés pour être lus et interprétés par une machine, tels que des codes barres, des matrices de points, etc. ; de moyens d'identification sans contact du type RFID ; etc.

En variante ou en combinaison, ces moyens d'identification peuvent être agencés sur l'ossature intermédiaire de manière à ce qu'un opérateur puisse prendre un support d'attache quelconque et l'agencer sur l'ossature intermédiaire en un site d'assemblage préférentiel repéré par ces moyens d'identification. Dans ce cas, ces moyens d'identification sont de préférence des moyens visuels aisément identifiables par l'opérateur.

Un tel dispositif permet ainsi de définir la configuration visée avant son installation sur l'ossature structurelle, ce qui permet un montage ultérieur rapide et aisé. Les moyens d'identification visuels facilitent le travail des opérateurs de montage. Cela étant, si un changement de configuration est nécessaire, y compris après la fin du montage initial, ce dernier est possible car chaque support d'attache est amovible et peut être fixé en un autre point d'un rail de l'ossature intermédiaire. Le moyen d'identification préalablement associé à la position initiale peut alors être ôté du rail de manière à ne pas induire un opérateur en erreur qui verrait un moyen d'identification sur le rail qui ne comprend pas de support d'attache. Pour ce faire, ces moyens d'identification sont de préférence des étiquettes adhésives amovibles.

Chaque support d'attache porte au moins une attache d'au moins un équipement réseau. Un support d'attache et une attache peuvent être formés d'une seule pièce ou être formés d'un assemblage de pièces.

Selon une variante de l'invention, un support d'attache présente au moins un point d'ancrage et porte une attache par point d'ancrage. Par exemple, ce point d'ancrage peut être réalisé par l'aménagement d'un orifice ou d'un trou taraudé destiné à recevoir des éléments de fixation tels que vis ou vis écrou de manière à permettre l'ancrage d'une attache sur le support d'attache.

Selon l'invention, les attaches d'un équipement non dimensionnant -notamment d'un équipement réseau- peuvent être de tous types. Ces attaches peuvent être des agrafes, des boucles, des colliers, des boutons, des crochets, des épingles, des systèmes à velcro, à pression, etc. Une attache peut être spécifique à chaque type d'équipement, ou permettre le maintien d'une variété d'équipements.

De même, un support d'attache peut être associé à une attache spécifique ou accepter une variété d'attaches différentes.

La fixation de l'ossature intermédiaire sur l'ossature structurelle est réalisée par l'intermédiaire des brides de fixation ancrées dans la structure au niveau de sites de fixation.

Ces brides de fixation sont ancrées sur l'ossature structurelle par l'intermédiaire de tout type de moyens de fixation, tels que par exemple des moyens de type vis écrou.

Ces brides de fixation peuvent également présenter diverses formes et dimensions.

Ces brides sont choisies dans un groupe de brides prédéterminées en nombre limité. Selon une variante de l'invention, toutes les brides sont identiques. Selon cette variante, les sites de fixation des brides sont alors tous identiques, ce qui facilite la conception de l'ossature structurelle du véhicule.

Avantageusement et selon l'invention, au moins une bride de fixation -notamment chaque bride de fixation- de ladite ossature intermédiaire sur ladite ossature structurelle du véhicule comprend une barrette rigide s'étendant le long d'une direction, dite direction longitudinale, comprenant :
- une série d'alésages agencée le long de la direction longitudinale, chaque alésage étant adapté pour permettre le passage de moyens de fixation du type vis écrou de manière à assurer la fixation de cette barrette de fixation sur ladite ossature structurelle,
- une pluralité de logements de réception traversants ménagées dans ladite barrette en s'étendant le long d'une direction perpendiculaire à ladite direction longitudinale, chaque logement de réception présentant une section droite transversale conformée et conjuguée à la section droite transversale des rails de l'ossature intermédiaire de manière à ce que chaque logement de réception de chaque barrette puisse recevoir au moins un rail de fixation.

Selon cette variante de l'invention, une bride de fixation comprend une barrette s'étendant le long d'une direction longitudinale et présentant une section droite longitudinale en forme de créneaux. Chaque créneau forme un logement de réception d'au moins un rail.

La barrette présente une série d'alésages agencée le long de la direction longitudinale, chaque alésage s'étendant sur la hauteur de la barrette et étant adapté pour permettre le passage de moyens de fixation du type vis écrou de manière à assurer la fixation de cette barrette de fixation sur ladite ossature structurelle.

Selon cette variante, avantageusement et selon l'invention, au moins une barrette de fixation -notamment chaque barrette de fixation-comprend un cavalier adapté pour venir se loger sur ladite barrette de fixation de manière à empêcher tout délogement intempestif des rails de fixation des logements de réception.

Ce cavalier permet de recouvrir les créneaux, ce qui limite les déplacements intempestifs des rails selon une direction orthogonale à l'axe de ces rails.

Avantageusement et selon l'invention, au moins une barrette de fixation -notamment chaque barrette de fixation- comprend un bossage ménagé dans au moins un logement de réception de cette barrette de manière à combler les tolérances de fabrication des rails et des barrettes de fixation.

Un tel bossage permet de limiter le jeu entre un rail logé dans un logement de réception d'une barrette de fixation et cette barrette de fixation.

Ce bossage peut être ménagé au voisinage d'un bord latéral de la barrette ou à équidistance entre les deux bords latéraux de la barrette.

Les différents éléments d'un dispositif de montage selon l'invention peuvent être en divers matériaux, tels que des matériaux métalliques, des matériaux polymériques, des matériaux composites, etc.

Un dispositif selon l'invention permet le support de tout type d'équipements non dimensionnants par rapport à l'ossature structurelle du véhicule.

En pratique, un dispositif de montage selon l'invention est particulièrement destiné à la mise en place, dans un véhicule, d'équipements d'un réseau électrique, d'équipements d'un réseau pneumatique, d'équipements d'un réseau hydraulique, ou d'équipements d'un réseau mixte électrique, pneumatique, hydraulique.

L'invention s'étend à un véhicule équipé d'un dispositif de montage selon l'invention.

En particulier, l'invention concerne un aéronef équipé d'un dispositif de montage selon l'invention, un train à grande vitesse équipé d'un dispositif de montage selon l'invention et de manière générale un véhicule comprenant une ossature structurelle comprenant une pluralité de sites de fixation de brides de fixation ménagées régulièrement sur l'ossature structurelle.

Pour ce faire, l'invention concerne un aéronef comprenant une cellule d'aéronef, caractérisé en ce que ladite cellule d'aéronef comprend :
- une pluralité de sites de fixation régulièrement répartis sur ladite cellule, chaque site de fixation étant adapté pour recevoir des moyens de fixation d'une bride de fixation rigide d'un dispositif de montage selon l'invention de manière à pouvoir assurer la fixation de cette bride de fixation sur ladite cellule,
- au moins un dispositif de montage d'équipements non dimensionnants selon l'invention, ledit dispositif de montage étant fixé rigidement à ladite cellule au niveau d'au moins un site de fixation.

L'invention s'étend également à un procédé de montage d'équipements réseau sur une ossature structurelle d'un véhicule.

Pour ce faire, l'invention concerne également un procédé de montage d'équipements non dimensionnants sur une ossature structurelle d'un véhicule,
caractérisé en ce que :
- des sites de fixation sont ménagés sur ladite ossature structurelle du véhicule et régulièrement répartis sur cette ossature, chaque site de fixation étant adapté pour recevoir au moins une bride de fixation,
- des brides de fixation rigide sont fixées à ladite ossature structurelle au niveau d'un ensemble de sites de fixation, chaque bride de fixation étant adaptée pour recevoir une portion d'une ossature intermédiaire et la maintenir rigidement de manière à empêcher tout déplacement intempestif de cette portion d'ossature intermédiaire par rapport à l'ossature structurelle,
- une ossature intermédiaire rigide est agencée en regard d'une portion de ladite ossature structurelle et des portions de cette ossature intermédiaire sont logées dans lesdites brides de fixation, ladite ossature intermédiaire comprenant un ensemble de sites d'assemblage rigide d'un support d'attache à ladite ossature intermédiaire,
- des supports d'attache sont assemblés à ladite ossature intermédiaire au niveau d'un ensemble desdits sites d'assemblage, chaque support d'attache portant au moins une attache d'au moins un équipement non dimensionnant,
- des équipements non dimensionnant sont logés dans lesdites attaches portées par lesdits supports d'attache.

Un procédé de montage selon l'invention est avantageusement mis en oeuvre par et dans un dispositif de montage selon l'invention.

Un dispositif de montage selon l'invention met avantageusement en oeuvre un procédé de montage selon l'invention.

L'invention concerne un dispositif de montage d'équipements non dimensionnants -notamment d'équipements réseau-, un véhicule équipé d'un dispositif de montage d'équipements non dimensionnants -notamment d'équipements réseau- et un procédé de montage d'équipements non dimensionnants notamment d'équipements réseau- caractérisés en combinaison par tout ou partie des caractéristiques mentionnées ci-dessus ou ci-après.

D'autres caractéristiques, buts et avantages de l'invention apparaîtront à la lecture de la description suivante qui présente à titre d'exemple non limitatif un mode de réalisation de l'invention, en référence aux dessins annexés ; sur ces dessins :
- la figure 1 est une vue schématique en perspective d'une portion d'un dispositif de montage d'équipements non dimensionnants selon un mode de réalisation de l'invention sur une ossature de plancher d'un aéronef,
- la figure 2 est une vue schématique en perspective d'une portion d'un dispositif de montage d'équipements non dimensionnants selon un mode de réalisation de l'invention sur une ossature de plancher d'un aéronef comprenant deux rails selon un mode de réalisation de l'invention agencés à angle droit l'un par rapport à l'autre et liés par un raccord de rails selon un mode de réalisation de l'invention,
- la figure 3 est une vue schématique en perspective d'une bride de fixation selon un mode de réalisation de l'invention comprenant quatre logements de réception d'un rail selon un mode de réalisation de l'invention dont deux maintiennent respectivement un rail,

- la figure 4 est une vue schématique en perspective de deux rails selon un mode de réalisation de l'invention portant des supports d'attache selon un mode de réalisation de l'invention,
- la figure 5 est une vue schématique en perspective éclatée d'un support d'attache selon un mode de réalisation et d'un fermoir selon un mode de réalisation de l'invention,
- la figure 6 est une vue schématique en perspective d'une barrette de fixation d'une ossature intermédiaire sur une ossature structurelle selon un mode de réalisation de l'invention et d'un cavalier selon un mode de réalisation de l'invention,
- la figure 7 est une vue schématique en perspective d'une portion d'un dispositif de montage selon un mode de réalisation de l'invention comprenant un rail logé dans une barrette de fixation orthogonalement à la face de la barrette en contact avec la paroi de l'ossature structurelle,
- la figure 8 est une vue schématique en perspective d'un support d'attache selon un autre mode de réalisation,
- les figures 9a et 9b sont des vues schématiques en perspective d'une barrette de fixation d'une ossature intermédiaire sur une ossature structurelle et de cavaliers selon un autre mode de réalisation de l'invention,
- la figure 10 est une vue schématique en perspective d'une portion d'un dispositif de montage d'équipements non dimensionnants selon un autre mode de réalisation de l'invention,
- la figure 11 est une vue schématique en perspective d'un raccord de rails selon un mode de réalisation de l'invention.

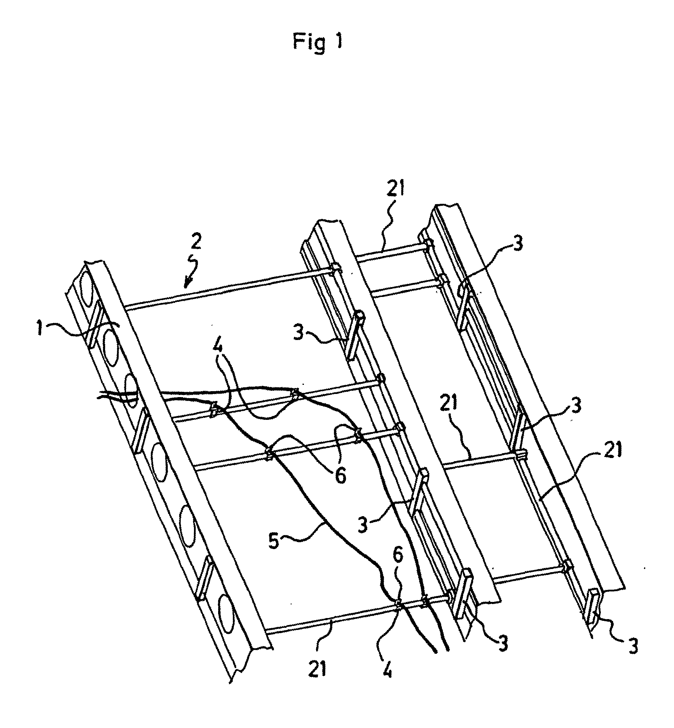

Selon l'invention et tel que représenté notamment sur la figure 1, un dispositif de montage d'équipements 5 d'un réseau sur une ossature 1 structurelle d'un véhicule comprend une ossature 2 intermédiaire rigide, une pluralité de brides 3 de fixation rigide de ladite ossature 2 intermédiaire sur ladite ossature 1 structurelle du véhicule, une pluralité de supports 4 d'attache assemblés à l'ossature 2 intermédiaire en un ensemble de sites 20 d'assemblage rigide, et une pluralité d'attaches 6 d'au moins un équipement 5 non dimensionnant, tel qu'un équipement d'un réseau électrique, chaque attache 5 étant portée par un support 4 d'attache.

L'ossature 2 intermédiaire peut être réalisée par diverses pièces présentant diverses formes et structures. Elle peut par exemple comprendre des plaques, des grilles, des planches, des lames, des treillis, des tiges, des tubes, des câbles, des filets, etc. portés par les brides 3 de fixation et s'étendant en regard de l'ossature 1 structurelle selon une ou plusieurs directions.

Selon un mode de réalisation préférentiel, et tel que représenté sur les figures 1 à 4, l'ossature 2 intermédiaire comprend une pluralité de rails 21 de réception des supports d'attache 4. Chaque rail 21 est adapté pour recevoir, en une pluralité de points du rail formant les sites 20 d'assemblage, au moins un support 4 d'attache avec des moyens d'assemblage de ce support 4 d'attache sur le rail 21 adaptés pour que le support 4 d'attache ne puisse pas se déplacer spontanément le long du rail 21, ni autour de ce dernier, une fois assemblé au le rail 21.

Pour ce faire, et selon le mode de réalisation préférentiel représenté sur les figures, les rails 21 sont formés par des tubes rigides en matériau métallique ou composite à section droite transversale carrée. Les rails 21 peuvent présenter différentes longueurs, par exemple comprises entre 5 mm et 10 mètres. Un rail 21 peut être rectiligne ou cintré sur un rayon de 100 mm à 10 mètres, ou autre.

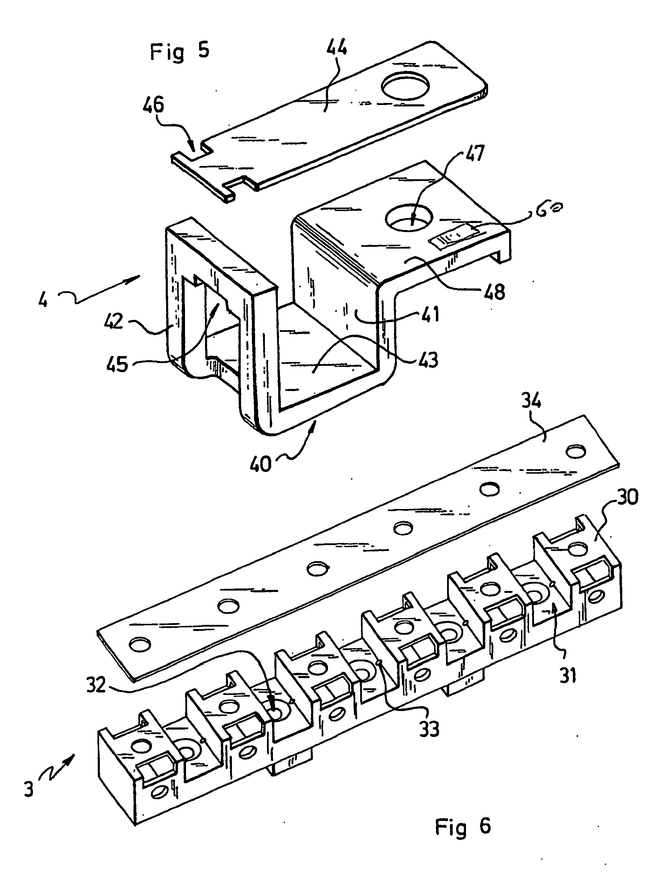

Tel que représenté sur la figure 5, chaque support 4 d'attache comprend une pince rappelée élastiquement en position de serrage, dite pince 40 élastique, adaptée pour permettre la fixation de ce support 4 d'attache sur le rail 21. Cette pince 40 élastique présente deux parois 41, 42, élastiquement flexibles, parallèles l'une à l'autre et espacées l'une de l'autre d'une dimension légèrement inférieure à la dimension d'un côté du carré de la section droite transversale d'un rail carrée, de manière à ce que ce support 4 d'attache puisse pincer le rail 21 en tout point du rail 21, et empêcher tout déplacement intempestif du support 4 d'attache le long du rail 21, une fois fixé sur ce dernier.

Un dispositif selon l'invention permet à un opérateur humain chargé de monter des équipements 5 non dimensionnants sur une ossature 2 intermédiaire, de disposer d'une infinité continue de positions d'assemblage d'un support 4 d'attache sur un rail 21. En effet, une pince 40 élastique d'un support 4 d'attache peut être fixée en tout point du rail 21, le long du rail. Un dispositif selon l'invention permet donc une grande souplesse de montage d'équipements 5 non dimensionnants sur l'ossature 2 intermédiaire, ce qui permet notamment, en atelier de montage, de choisir un montage des équipements 5 qui puisse par exemple s'accommoder de contraintes non initialement prévues.

Selon un mode de réalisation avantageux de l'invention, et tel que représenté sur la figure 5, un support 4 d'attache comprend des moyens d'identification du site d'assemblage de l'ossature intermédiaire où ce support d'attache doit être positionné. Ces moyens d'identification permettent de faciliter le travail d'un opérateur humain qui doit agencer les supports d'attache sur les rails de l'ossature intermédiaire. Ces moyens d'identification du site d'assemblage peuvent être de tous types. Il peut s'agir de moyens d'identification optiques directement lisibles et compréhensibles par un opérateur humain, tels que des coordonnées en (x, y, z) du site d'assemblage ; de moyens optiques codés représentatifs d'un site d'assemblage et adaptés pour être lus et interprétés par une machine, tels que des codes barres, des matrices de points, etc. ; de moyens d'identification sans contact du type RFID ; etc.

Selon le mode de réalisation de la figure 5, ces moyens d'identification comprennent un code 60 à barres. Ce code 60 à barres peut par exemple être interprété par une machine portative pour fournir à un opérateur les coordonnées en (x, y, z) du site d'assemblage auquel il doit être assemblé, ou une représentation graphique affichée sur un écran d'une machine portative du site d'assemblage auquel il doit être assemblé.

La relation entre les codes 60 à barres et les sites d'assemblage est de préférence établie sur plan préalablement au montage du dispositif par des moyens informatiques. Ces moyens informatiques peuvent être embarqués dans la machine portative ou enregistrés sur un serveur accessible à distance depuis la machine portative.

Selon un autre mode de réalisation de l'invention, ces moyens d'identification sont directement agencés sur les rails de l'ossature intermédiaire.

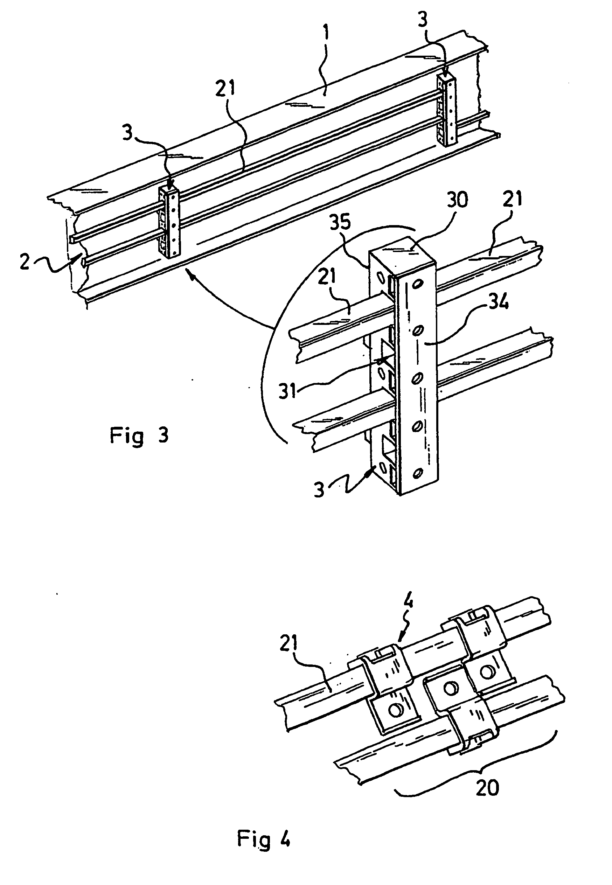

La figure 4 présente deux rails 21 logés dans une bride 3 de fixation, chaque rail portant au moins un support 4 d'attache, chaque support 4 d'attache comprenant une pince de fixation élastique adaptée pour permettre l'assemblage entre le support 4 d'attache et un rail 21.

Une pince 40 élastique d'un support 4 d'attache peut être réalisée en divers matériaux. Néanmoins, selon un mode de réalisation préférentiel de l'invention, la pince 40 élastique est réalisée en un matériau carboné. Cela permet de conférer à la pince 40 élastique des propriétés d'élasticité en flexion.

Selon d'autres modes de réalisation non représentés sur les figures, les rails 21 et les supports 4 d'attache peuvent présenter d'autres formes et dimensions conjuguées. Par exemple, un rail 21 peut présenter une section droite transversale dont le contour périphérique ne présente qu'une portion droite, voire aucune. Un rail dont la section droite transversale présente une symétrie de révolution a cependant l'inconvénient de rendre plus complexe l'obtention d'un blocage en rotation des supports d'attache par rapport au rail.

Selon le mode de réalisation de la figure 5, la pince 40 élastique comprend une paroi 43 orthogonale aux parois 41, 42 flexibles. Une fois assemblées à un rail 21 parallélépipédique, à section droite carrée, les parois 41, 42, 43 sont respectivement en contact avec trois des quatre faces longitudinales extérieures du rail 21.

Selon un mode de réalisation préférentiel de l'invention, et tel que représenté sur la figure 5, un support 4 d'attache comprend un fermoir 44 de verrouillage adapté pour venir verrouiller la pince 40 élastique sur le rail 21, en s'étendant parallèlement à la paroi 43 et orthogonalement aux parois 41, 42 flexibles, de manière à ce qu'une pince élastique équipée du fermoir 44 de verrouillage enserre complètement le rail 21. En d'autres termes, le fermoir 44 de verrouillage vient recouvrir la face du rail 21 parallélépipédique à section droite carrée non en contact avec une des parois 41, 42, 43 de la pince 40 élastique.

Ce fermoir 44 de verrouillage comprend des moyens d'assemblage à une paroi flexible de la pince 40 élastique. Par exemple, et tel que représenté sur la figure 5, une paroi 42 flexible comprend un ouverture 45 adaptée pour permettre le passage d'une portion 46 d'extrémité du fermoir 44 de verrouillage. Cette portion 46 d'extrémité du fermoir 44 de verrouillage présente une forme et des dimensions adaptées pour permettre le logement de cette portion 46 d'extrémité dans l'ouverture 45 de la paroi 42 et le coincement de cette portion 46 d'extrémité dans la paroi 42.

Selon l'invention, un support 4 d'attache porte au moins une attache 6 d'au moins un équipement 5.

Selon le mode de réalisation des figures, un support 4 d'attache et une attache 6 sont deux pièces distinctes et le support 4 d'attache comprend un point d'ancrage de cette attache 6 sur le support 4 d'attache. Ce point d'ancrage est selon le mode de réalisation des figures réalisé par une lumière 47 traversante de contour circulaire ménagée sur une ailette 48 de la pince 40 élastique. Cette lumière 47 est adaptée pour recevoir une attache 6, par exemple, une attache 6 comprenant une portion élastique présentant une forme et des dimensions conformées et conjuguées à la forme et aux dimensions de la lumière 47 de manière à permettre l'emboîtement de la portion élastique dans la lumière 47.

L'ailette 48 dans laquelle est ménagée la lumière 47 est de préférence portée par l'une des paroi 41, 42 flexibles et s'étend orthogonalement à ces parois. Selon le mode de réalisation de la figure 5, cette ailette 48 est portée par la paroi 41 flexible. Selon le mode de réalisation de la figure 5, le fermoir 44 de verrouillage s'étend, une fois logé dans la paroi 42 flexible, en regard de la paroi 41, au dessus de l'ailette 48 et parallèlement à cette dernière. Dès lors, pour faciliter l'ancrage d'une attache 6 sur la pince 40, le fermoir 44 peut comprendre une ouverture coaxiale à la lumière 47 d'ancrage de l'ailette 48. Ainsi, une attache 6 est ancrée conjointement dans le fermoir 44 de verrouillage et dans la pince 40 élastique.

Selon ce mode de réalisation, l'ailette 48 est parallèle à l'axe du rail 21 une fois le support 4 d'attache assemblé au rail 21.

Une attache selon l'invention peut présenter diverses formes. Une attache selon l'invention peut être une agrafe, une boucle, un collier, un bouton, un crochet, une épingle, une paire de sangles à boucles et crochets (velcro®), ou boutons à pression, etc. Une attache peut être spécifique à chaque type d'équipement, ou permettre le maintien d'une variété d'équipements.

Selon un mode de réalisation de l'invention, une attache 6 comprend un tenon présentant une forme et des dimensions conjuguées à la forme et aux dimensions d'au moins une mortaise formée dans au moins un support 4 d'attache de manière à pouvoir être logé dans ce support d'attache par emboîtement de ce tenon dans cette mortaise et maintenu rigidement par ce dernier.

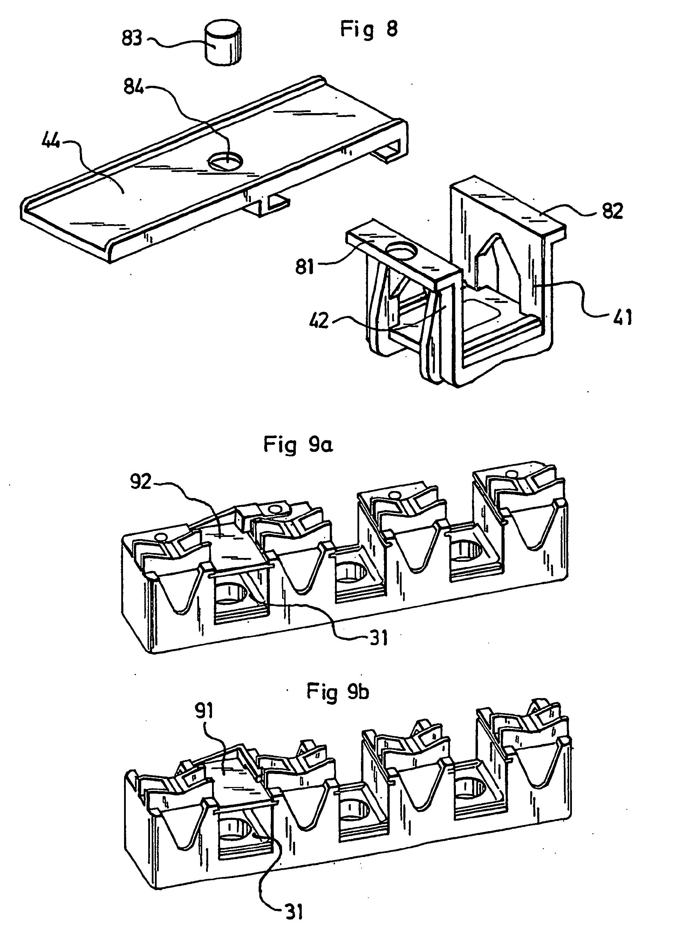

Selon un autre mode de réalisation représenté sur la figure 8, la paroi 41 flexible d'un support d'attache présente une aile 81 sensiblement perpendiculaire à cette paroi 41 et s'étend en s'éloignant de la paroi 42 flexible en regard. De même, la paroi 42 flexible présente une aile 82 sensiblement perpendiculaire à cette paroi 42 et s'étend en s'éloignant de la paroi 41 flexible en regard. Les formes et dimensions des rainures du fermoir 44 et des ailes du support d'attache sont conformées et conjuguées de sorte que le fermoir 44 puisse être glissé dans les ailes 81, 82 et venir ainsi fermer le support d'attache et empêcher tout déplacement intempestif du support d'attache du rail (non représenté sur la figure 8 à des fins de clarté).

En outre, selon le mode de réalisation de la figure 8, le blocage du fermoir 44 peut être sécurisé par un rivet ou un tenon 83, par exemple en matière plastique, qui vient se loger dans des trous 84 agencés respectivement dans le support d'attache et dans le fermoir 44.

Bien entendu, selon d'autres modes de réalisation, le blocage du fermoir 44 de verrouillage sur la pince 40 élastique, une fois cette dernière fixée sur un rail 21, peut être réalisé par d'autres moyens, par exemple par des moyens du type vis écrou ou autres.

Selon d'autres modes de réalisation, un support 4 d'attache et une attache 6 peuvent être formés d'une seule pièce.

La figure 3 est une vue d'un détail d'un dispositif de montage selon l'invention. Sur cette vue, des rails 21 sont logés dans une bride 3 de fixation.

Selon le mode de réalisation des figures, une bride 3 de fixation de l'ossature 2 intermédiaire sur l'ossature 1 structurelle d'un véhicule comprend une barrette 30 s'étendant le long d'une direction, dite direction longitudinale. Cette barrette 30 comprend une pluralité de logements 31 de réception d'un rail 21. Ces logements de réception sont traversants et sont ménagés dans la barrette 30 en s'étendant le long d'une direction perpendiculaire à la direction longitudinale.

Chaque logement 31 de réception d'un rail 21 présente une section droite transversale conformée et conjuguée à la section droite transversale d'un rail 21 de l'ossature 2 intermédiaire de manière à ce que chaque logement 31 de réception de chaque barrette 30 puisse recevoir au moins un rail 21.

Sur la figure 3, la barrette 30 comprend quatre logements de réception d'un rail 21 dont deux sont effectivement occupés par un rail 21.

Des barrettes 30 selon ce mode de réalisation permettent de fixer l'ossature 2 intermédiaire sur l'ossature 1 structurelle.

Pour ce faire, chaque barrette 30 comprend, tel que représenté sur la figure 6, une série d'alésages 32 répartis le long de la direction longitudinale. Chaque alésage 32 s'étend perpendiculairement à la direction longitudinale de la barrette 30 et est adapté pour permettre le passage d'une vis ou d'un boulon apte à assurer la fixation de cette barrette 30 de fixation sur l'ossature 1 structurelle.

En pratique, l'ossature 1 structurelle comprend une pluralité de sites de fixation régulièrement répartie sur toute l'ossature 1 structurelle, chaque site de fixation étant adapté pour recevoir une barrette 30 de fixation.

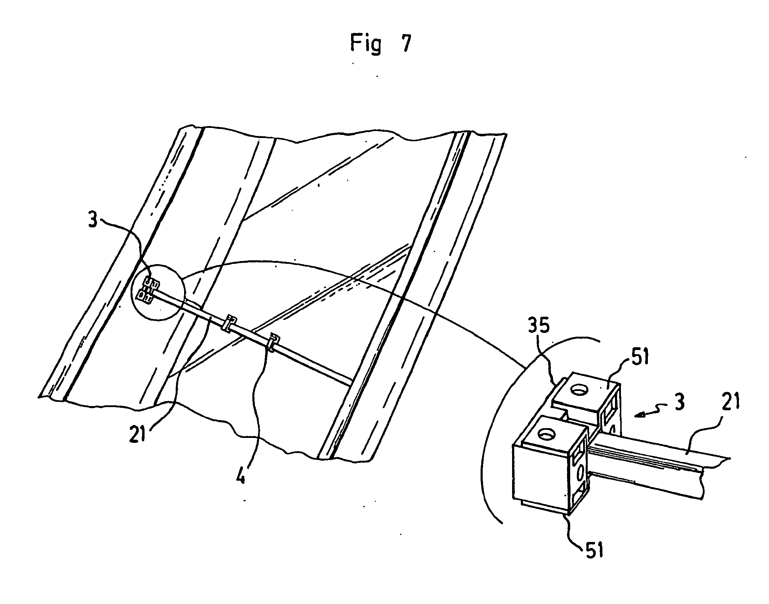

Selon le mode de réalisation des figures, une barrette 30 est crénelée, et chaque créneau forme un logement 31 de réception d'au moins un rail 21. Selon un mode de réalisation de l'invention, et tel que représenté sur la figure 7, un rail 21 peut être logé dans un créneau de telle sorte qu'une extrémité transversale de ce rail 21 vienne en butée contre le fond du créneau. Selon la figure 7, un rail 21 est logé dans un logement de réception d'une barrette 3, orthogonalement à la face de la barrette 3, dite face 35 de montage, en contact avec l'ossature 1 structurelle. En variante ou en combinaison, et tel que représenté, notamment sur la figure 3, un rail 21 peut être logé dans une bride 3 de fixation, parallèlement au plan dans lequel s'étend la face 35 de montage de cette barrette 3 de fixation. Une bride de fixation présentant une telle barrette crénelée permet une grande variété de montage des rails, ces derniers pouvant présenter différentes orientations par rapports aux barrettes.

Selon un mode de réalisation préférentiel de l'invention, une barrette 30 comprend, pour chaque créneau formant un logement 31 de réception d'un rail 21, au moins un bossage 33 ménagé à équidistance des deux bords latéraux de la barrette 30 de manière à combler les tolérances de fabrication des rails 21 et des barrettes 30 de fixation.

Une barrette 30 selon l'invention peut présenter une longueur comprise entre 10 mm et 10 mètres, une largeur comprise entre 10 mm et 100 mm, et être de forme rectiligne ou cintrée. Une barrette 30 selon l'invention peut être creuse ou pleine.

Une barrette 30 selon l'invention peut être réalisée en un matériau rigide métallique, composite ou polymérique.

De préférence, une barrette 30 selon l'invention est recouverte d'une feuille métallique -notamment une feuille de titane- sur toute sa longueur, désaffleurant uniquement les zones de fond de créneaux de manière à permettre le ménagement de points de départ potentiels d'une métallisation.

Selon un mode de réalisation préférentiel et tel que représenté sur les figures 3 et 6, une bride 3 de fixation comprend également un cavalier 34 adapté pour recouvrir les créneaux formant les logements 31 de réception de rails 21 et empêcher tout délogement de ces rails de ces créneaux selon n'importe quelle direction orthogonale à l'axe de ces rails. La fixation d'un cavalier 34 sur la barrette 30 peut être réalisée par différents moyens, tels que des moyens d'assemblage à vis, à tenons et mortaises, à écrous prisonniers, etc.

Selon un mode de réalisation préférentiel, une barrette 30 comprend une pluralité d'orifices ménagés sur chacune des faces qui n'est pas en contact avec l'ossature structurelle, une fois cette barrette fixée sur l'ossature structurelle. Chaque cavalier comprend également une pluralité d'orifices, la distance entre deux orifices d'un cavalier étant égale à la distance entre deux orifices d'une face de la barrette. Dès lors, un cavalier peut être ménagé sur la barrette de manière à ce qu'au moins deux orifices de ce cavalier soient exactement en regard de deux orifices d'une face de la barrette. Ces orifices coaxiaux peuvent recevoir tous types de moyens de fixation adaptés pour relier rigidement ce cavalier à cette face de la barrette. Selon un mode de réalisation préférentiel, les orifices de la barrette ou les orifices des cavaliers sont équipés d'écrous prisonniers, de manière à faciliter les opérations de fixation d'un cavalier sur une face d'une barrette.

Dans le cas où un rail 21 est monté orthogonalement à la face 35 de montage de la bride 3 de fixation sur l'ossature 1 structurelle et tel que représenté sur la figure 7, deux cavaliers 51 peuvent être ménagés sur les bords latéraux longitudinaux de la barrette 30 de manière à empêcher tout délogement de ce rail du créneau selon n'importe quelle direction orthogonale à la direction de ce rail 21. La fixation d'un cavalier 51 sur une face de la barrette 30 peut être obtenue par les mêmes moyens que la fixation d'un cavalier 34 sur la barrette 30.

Selon un autre mode de réalisation représenté sur les figures 9a et 9b, chaque créneau 31 d'une barrette peut être verrouillé par un cavalier 91, 92 individuel. Ce cavalier 91, 92 individuel permet de sécuriser le blocage d'un rail logé dans ce créneau 31. Selon le mode de réalisation de la figure 9a, le blocage du cavalier 91 individuel est obtenu par un ergot, par exemple un ergot en un matériau plastique. Selon le mode de réalisation de la figure 9b, le blocage du cavalier 92 individuel est obtenu par un clip élastique qui vient se loger entre deux parois verticales portées par la barrette et qui empêche le déplacement du cavalier 92 individuel par rapport à la barrette.

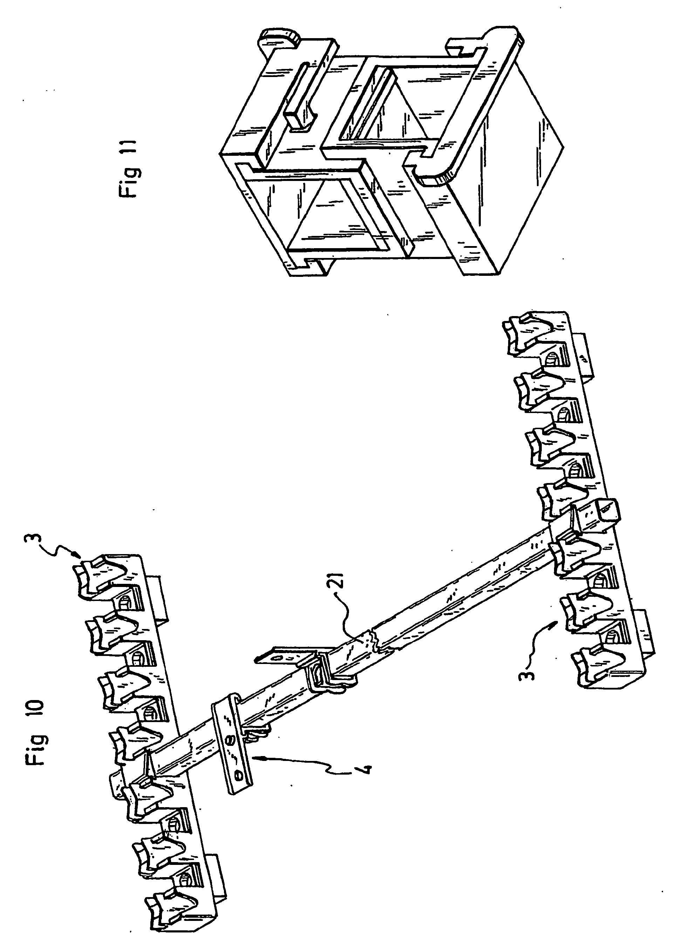

La figure 10 présente une portion d'un dispositif selon l'invention dont les barrettes sont celles du mode de réalisation de la figure 9b et les supports d'attache sont ceux du mode de réalisation de la figure 8.

Un dispositif de montage d'équipements selon l'invention peut être fixé à tous types de structure de tous types de véhicules, et plus particulièrement sur des véhicules motorisés.

Un dispositif de montage d'équipements non dimensionnants selon l'invention est particulièrement destiné à être fixé sur une ossature d'un aéronef ou d'un train à grande vitesse, et de manière générale sur une ossature d'un véhicule optimisée en terme de poids et de résistance mécanique -notamment en fatigue-.

L'invention s'étend à un véhicule équipé d'un tel dispositif de montage.

Selon un mode de réalisation de l'invention non représenté sur les figures, un aéronef comprend une cellule d'aéronef formant l'ossature structurelle de l'aéronef. Cette cellule d'aéronef est formée de membrures (longerons, traverses, solives, nervures, raidisseurs, cadres, lisses, etc.) assemblées les unes aux autres -notamment par rivetage et/ou collage et/ou soudure-, chaque membrure étant adaptée pour porter au moins un équipement non dimensionnant. Par ailleurs, cette cellule d'aéronef comprend une pluralité de sites de fixation régulièrement répartis sur la cellule. Chaque site de fixation est adapté pour recevoir des moyens de fixation d'une bride 3 de fixation rigide d'un dispositif de montage selon l'invention de manière à pouvoir assurer la fixation de cette bride 3 de fixation sur la cellule.

Un aéronef selon l'invention comprend également un dispositif de montage selon l'invention fixé rigidement sur la cellule au niveau d'au moins un site de fixation.

La figure 3 représente, à titre d'exemple non limitatif, une portion d'un dispositif de montage selon l'invention fixé sur un plancher d'un aéronef. Cette portion de dispositif de montage comprend une barrette 30 de fixation selon un mode de réalisation de l'invention dans laquelle sont insérés plusieurs rails 21 de réception de supports 4 d'attache.

Un rail 21 peut s'étendre intégralement entre deux barrettes 30 de fixation ou être relié à un autre rail 21 par l'intermédiaire d'un raccord 7 de rail, cet autre rail étant lui-même raccordé à un troisième rail ou logé dans une barrette de fixation. En d'autres termes, toutes les combinaisons sont possibles.

Selon un mode de réalisation préférentiel, l'ossature 2 intermédiaire comprend une pluralité de raccords 7 de rails 21 adaptés pour relier rigidement entre eux deux rails 21 adjacents.

Ces raccords 7 de rails peuvent être de tous types. Ils peuvent permettre un raccord coaxial de deux rails, un raccord à angle droit de deux rails, un raccord selon un angle prédéterminé de deux rails, etc.

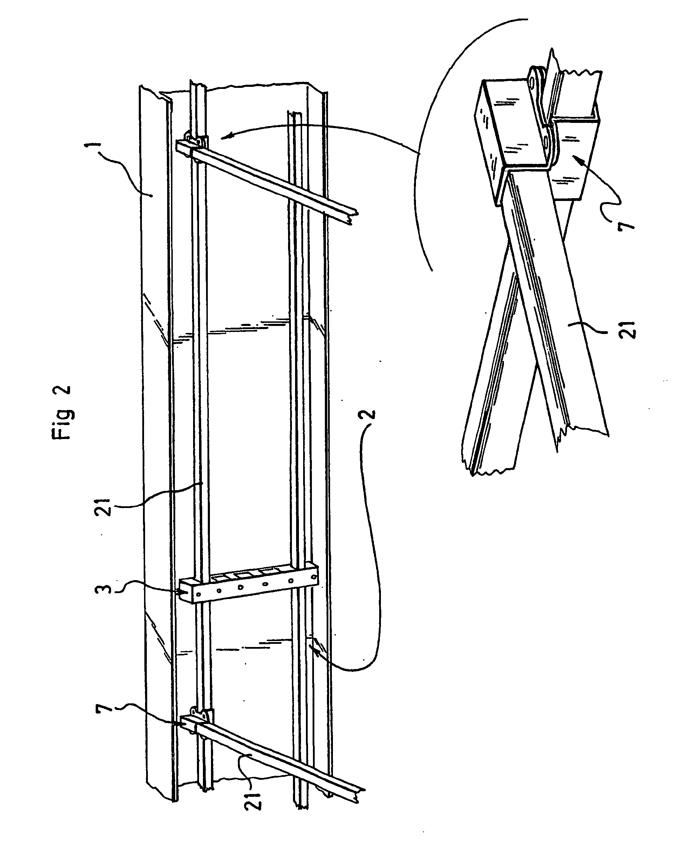

Sur la figure 2, deux rails 21 sont reliés par l'intermédiaire d'un raccord 7 de rails adapté pour relier entre eux deux rails orthogonaux.

Selon ce mode de réalisation, le raccord 7 de rails est formé de deux pièces, chaque pièce présentant une section droite transversale en forme de U, chaque branche du U étant par ailleurs munie d'une ailette latérale perpendiculaire à cette branche. La distance entre les deux branches du U est sensiblement égale à la dimension d'un côté de la section droite transversale d'un rail 21. Ainsi, un rail 21 peut être longitudinalement logé dans une telle pièce. Chaque ailette de chaque pièce comprend par ailleurs des alésages adaptés pour recevoir des moyens d'assemblage tels que des ergots. Ainsi, selon un mode de réalisation, les deux rails et les deux pièces sont agencés de telle sorte que les ailettes de la première pièce viennent en contact avec les ailettes de la deuxième pièce, ce qui permet d'aligner les alésages des ailettes. Il est possible d'introduire dans les alésages alignés, des moyens d'assemblage, par exemple à vis, pour relier rigidement ces deux pièces et de surcroît les deux rails.

Selon un autre mode de réalisation permettant un montage plus facile que le mode de réalisation précédent, chaque pièce en U comprend deux écrous prisonniers montés en quinconce. Au montage, les écrous d'une pièce en U viennent se loger dans l'alésage en regard de l'autre pièce en U, assurant ainsi un assemblage rigide entre ces deux pièces.

Selon une autre variante de l'invention, les raccords de rails présentent, tels que représenté sur la figure 11, des formes sensiblement similaires à la forme générale d'un support d'attache à ceci prêt que le fermoir ne présente pas une ailette muni d'un alésage destiné à recevoir une attache d'un élément non dimensionnant.

Bien entendu, des raccords de rails selon l'invention peuvent présenter d'autres formes et structures.

L'invention concerne aussi un procédé de montage d'équipements non dimensionnants sur une ossature structurelle d'un véhicule.

Selon un mode de réalisation de l'invention, des sites de fixation sont ménagés sur ladite ossature structurelle du véhicule et régulièrement répartis sur cette ossature, chaque site de fixation étant adapté pour recevoir au moins une bride de fixation.

Puis, des brides de fixation rigide sont ensuite fixées à ladite ossature structurelle au niveau d'un ensemble de sites de fixation, chaque bride de fixation étant adaptée pour recevoir une portion d'une ossature intermédiaire et la maintenir rigidement de manière à empêcher tout déplacement intempestif de cette portion d'ossature intermédiaire par rapport à l'ossature structurelle.

Puis, une ossature intermédiaire rigide est agencée en regard de ladite ossature structurelle et des portions de cette ossature intermédiaire sont logées dans lesdites brides de fixation, ladite ossature intermédiaire comprenant un ensemble de sites d'assemblage rigide d'un support d'attache à ladite ossature intermédiaire.

Puis, des supports d'attache sont assemblés à ladite ossature intermédiaire au niveau d'un ensemble desdites sites d'assemblage, chaque support d'attache portant au moins une attache d'au moins un équipement non dimensionnant.

Puis, des équipements non dimensionnants, par exemple des équipements réseau, sont logés dans lesdites attaches portées par lesdits supports d'attache.

Un procédé selon l'invention permet de fixer des équipements sur une ossature d'un véhicule sans nécessiter une connaissance exacte, préalable au montage des équipements, de la configuration de ces équipements.

L'invention ne se limite pas aux seuls modes de réalisation décrits. En particulier, un dispositif de montage d'équipements selon l'invention peut comprendre d'autres types de brides de fixation, un autre type d'ossature intermédiaire, et d'autres types de supports d'attache, qui offre également une souplesse lors du montage des équipements, un confort lors de la conception du véhicule, et une possibilité de modifier les choix retenus sans engendrer une remise en cause de l'appareil.

## Revendications

1. Dispositif de montage d'équipements (5) non dimensionnants sur une ossature (1) structurelle d'un véhicule, ledit dispositif comprenant :
- une pluralité d'attaches (6) d'au moins un équipement (5) non dimensionnant, chaque attache (6) étant adaptée pour recevoir et maintenir au moins une portion d'un équipement (5) non dimensionnant,
- une ossature (2) intermédiaire rigide comprenant une pluralité de sites d'assemblage rigide d'au moins un support (4) d'attache à cette ossature (2) intermédiaire,
- une pluralité de supports (4) d'attache chacun portant au moins une attache (6) et une pince rappelée élastiquement en position de serrage, dite pince (40) élastique, adaptée pour permettre la fixation de ce support (4) d'attache en l'un quelconque des sites d'assemblage rigide,
- une pluralité de brides (3) de fixation rigide de ladite ossature (2) intermédiaire sur ladite ossature (1) structurelle du véhicule, chaque bride (3) de fixation étant ancrée rigidement sur l'ossature (1) structurelle et recevant au moins une portion d'ossature (2) intermédiaire et la maintenant rigidement de manière à empêcher tout déplacement intempestif de cette portion d'ossature (2) intermédiaire par rapport à l'ossature (I) structurelle.

2. Dispositif selon la revendication 1, **caractérisé en** cc que ladite ossature (2) intermédiaire comprend une pluralité de rails (21) de réception desdits supports (4) d'attache, chaque rail (21) de réception étant adapté pour recevoir rigidement, en tout point du rail (21), au moins un support (4) d'attache.

3. Dispositif selon la revendication 2, **caractérisé en ce qu'**au moins un rail (21) de ladite ossature (2) intermédiaire -notamment chaque rail de ladite ossature intermédiaire- est non symétrique de révolution.

4. Dispositif selon la revendication 3, **caractérisé en ce qu'**au moins un rail (21) de ladite ossature (2) intermédiaire -notamment chaque rail de ladite ossature intermédiaire-présente une section droite transversale dont le contour périphérique est polygonal -notamment carrée-.

5. Dispositif selon la revendication 4, **caractérisé en ce que** ladite pince (40) élastique d'un support (4) d'attache comprend deux parois (41, 42), élastiquement flexibles, parallèles l'une à l'autre et espacées l'une de l'autre d'une dimension légèrement inférieure à la dimension d'un côté du carré de la section droite transversale d'un rail (21) à section droite transversale carrée, de manière à ce que ce support (4) d'attache puisse pincer le rail (21) en tout point du rail (21), et empêcher tout déplacement intempestif du support (4) d'attache le long du rail (21), une fois fixé sur ce dernier.

6. Dispositif selon l'une des revendications 2 à 5, **caractérisé en ce qu'**au moins un support (4) d'attache -notamment chaque support d'attache- comprend un fermoir (44) de verrouillage adapté pour recouvrir la pince (40) élastique de ce support (4) d'attache de sorte que ce support (4) d'attache puisse enserrer entièrement le rail (21) sur lequel il est fixé, interdisant ainsi tout délogement de ce support (4) d'attache du rail (21).

7. Dispositif selon l'une des revendications 2 à 6, **caractérisé en ce que** ladite ossature (2) intermédiaire comprend des raccords (7) de rails adaptés pour relier rigidement entre eux deux rails (21) adjacents.

8. Dispositif selon l'une des revendications 2 à 7, **caractérisé en ce qu'**au moins une attache (6) d'au moins un équipement (5) non dimensionnant -notamment chaque attache- comprend un tenon présentant une forme et des dimensions conjuguées à la forme et aux dimensions d'au moins une mortaise formée dans au moins un support (4) d'attache -notamment chaque support d'attache- de manière à pouvoir être logé dans ce support (4) d'attache par emboîtement dudit tenon dans ladite mortaise et maintenu rigidement par ce dernier.

9. Dispositif selon l'une des revendications 2 à 8, **caractérisé en ce qu'**au moins une bride (3) de fixation -notamment chaque bride de fixation- de ladite ossature (2) intermédiaire sur ladite ossature (1) structurelle du véhicule comprend une barrette (30) rigide s'étendant le long d'une direction, dite direction longitudinale, comprenant :
- une série d'alésages (32) agencée le long de la direction longitudinale, chaque alésage (32) étant adapté pour permettre le passage de moyens de fixation du type vis écrou de manière à assurer la fixation de cette barrette (30) de fixation sur ladite ossature (1) structurelle,
- une pluralité de logements (31) de réception traversants ménagés dans ladite barrette (30) en s'étendant le long d'une direction perpendiculaire à ladite direction longitudinale, chaque logement (31) de réception présentant une section droite transversale conformée et conjuguée à la section droite transversale des rails (21) de l'ossature (2) intermédiaire de manière à ce que chaque logement (31) de réception de chaque barrette (30) puisse recevoir au moins un rail (21).

10. Dispositif selon la revendication 9, **caractérisé en ce qu'**au moins une barrette (30) de fixation -notamment chaque barrette de fixation-comprend au moins un cavalier (34) adapté pour venir se loger sur au moins une portion de ladite barrette (30) de fixation de manière à empêcher tout délogement intempestif des rails (21) des logements (31) de réception.

11. Dispositif selon l'une des revendications 9 ou 10, **caractérisé en ce qu'**au moins une barrette (30) de fixation -notamment chaque barrette de fixation- comprend un bossage (33) ménagé dans au moins un logement (31) de réception de cette barrette (30) de manière à combler les tolérances de fabrication d'un rail (21) logé dans ce logement (31) de réception et de cette barrette (30) de fixation.

12. Dispositif selon l'une des revendications 1 à 11, **caractérisé en ce que** lesdits équipements non dimensionnants sont choisis parmi les équipements d'un réseau électrique, les équipements d'un réseau pneumatique, les équipements d'un réseau hydraulique, et les équipements d'un réseau mixte électrique, pneumatique, hydraulique.

13. Dispositif selon l'une des revendications 1 à 12, **caractérisé en ce que** chaque support (4) d'attache comprend des moyens d'identification du site d'assemblage de l'ossature (2) intermédiaire où ce support (4) d'attache doit être positionné.

14. Aéronef comprenant une cellule d'aéronef, **caractérisé en ce que** ladite cellule d'aéronef comprend :
- une pluralité de sites de fixation régulièrement répartis sur ladite cellule, chaque site de fixation étant adapté pour recevoir des moyens de fixation d'une bride (3) de fixation rigide d'un dispositif de montage selon l'une des revendications 1 à 13 de manière à pouvoir assurer la fixation de cette bride (3) de fixation sur ladite cellule,
- au moins un dispositif de montage d'équipements non dimensionnants selon l'une des revendications 1 à 13, ledit dispositif de montage étant fixé rigidement à ladite cellule au niveau d'au moins un site de fixation.

15. Procédé de montage d'équipements non dimensionnants sur une ossature structurelle d'un véhicule, dite ossature (1) structurelle,
**caractérisé en ce que** :
- des sites de fixation sont ménagés sur ladite ossature (1) structurelle du véhicule et régulièrement répartis sur cette ossature (1), chaque site de fixation étant adapté pour recevoir au moins une bride (3) de fixation,
- des brides (3) de fixation rigide sont fixées à ladite ossature (1) structurelle au niveau d'un ensemble de sites de fixation, chaque bride (3) de fixation étant adaptée pour recevoir une portion d'une ossature (2) intermédiaire et la maintenir rigidement de manière à empêcher tout déplacement intempestif de cette portion d'ossature (2) intermédiaire par rapport à l'ossature (1) structurelle,
- une ossature (2) intermédiaire rigide est agencée en regard de ladite ossature (1) structurelle et des portions de cette ossature (2) intermédiaire sont logées dans lesdites brides (3) de fixation, ladite ossature (2) intermédiaire comprenant un ensemble de sites d'assemblage rigide d'un support (4) d'attache à ladite ossature (2) intermédiaire,
- des supports (4) d'attache sont assemblés à ladite ossature (2) intermédiaire au niveau d'un ensemble desdites sites d'assemblage, chaque support (4) d'attache comprenant une pince rappelée élastiquement position de serrage, dite pince élastique, adaptée pour permettre la fixation de ce support sur l'ossature intermédiaire, le support d'attache portant au moins une attache (6) d'au moins un équipement non dimensionnant,
- des équipements non dimensionnants sont logés dans lesdites attaches (6) portées par lesdits supports d'attache (4).

## Claims

1. A device for mounting non-dimensioning equipment (5) on a structural frame (1) of a vehicle, said device comprising:
- a plurality of fixings (6) for at least one piece of non-dimensioning equipment (5), each fixing (6) being capable of receiving and maintaining at least one portion of non-dimensioning equipment (5),
- a rigid intermediate frame (2) comprising a plurality of rigid assembling sites for at least one fixing holder (4) on said intermediate frame (2),
- a plurality of fixing holders (4) each bearing at least one fixing (6) and a clip returned elastically into the clamping position, known as a resilient clip (40), capable of permitting the fixing of this fixing holder (4) at any one of the rigid assembling sites,
- a plurality of rigid attachment clamps (3) for securing said intermediate frame (2) onto said structural frame (1) of the vehicle, each attachment clamp (3) being rigidly anchored on the structural frame (1) and receiving at least one intermediate frame portion (2) and maintaining the same rigidly in order to prevent any undesired movement of said intermediate frame (2) portion relative to the structural frame (1).

2. A device according to claim 1, **characterized in that** intermediate frame (2) comprises a plurality of rails (21) for receiving said fixing holders (4), each receiving rail (21) being capable of receiving rigidly, at any point of the rail (21), at least one fixing holder (4).

3. A device according to claim 2, **characterized in that** at least one rail (21) of said intermediate frame (2) - in particular each rail of said intermediate frame - is not symmetrical in revolution.

4. A device according to claim 3, **characterized in that** at least one rail (21) of said intermediate frame (2) - in particular each rail of said intermediate frame - has a straight cross section of which the peripheral contour is polygonal - in particular square.

5. A device according to claim 4, **characterized in that** said resilient clip (40) of a fixing holder (4) comprises two resiliently flexible walls (41, 42), parallel to one another and spaced apart from one another by a dimension slightly less than the dimension of one side of the square of the straight cross section of a rail (21) of square straight cross section, so that said fixing holder (4) may grip the rail (21) at any point of the rail (21) and prevent any undesired movement of the fixing holder (4) along the rail (21), once fixed thereto.

6. A device according to claims 2 to 5, **characterized in that** at least one fixing holder (4) - in particular each fixing holder - comprises a locking fastener (44) capable of covering the resilient clip (40) of said fixing holder (4) such that said fixing holder (4) may entirely grip the rail (21) to which it is fixed, thus preventing any dislodging of said fixing holder (4) from the rail (21).

7. A device according to one of claims 2 to 6, **characterized in that** said intermediate frame (2) comprises rail connectors (7) capable of rigidly connecting two adjacent rails (21) to one another.

8. A device according to one of claims 2 to 7, **characterized in that** at least one fixing (6) for at least one piece of non-dimensioning equipment (5) - in particular each fixing - comprises a peg having a shape and dimensions conjugate with the shape and dimensions of at least one hole formed in at least one fixing holder (4) - in particular each fixing holder - so as to be able to be housed in said fixing holder (4) by said peg being fitted into said hole and held rigidly thereby.

9. A device according to one of claims 2 to 8, **characterized in that** at least one attachment clamp (3) - in particular each attachment clamp - for said intermediate frame (2) on said structural frame (1) of the vehicle comprises a rigid bar (30) extending in one direction, known as the longitudinal direction, comprising:
- a series of bores (32) arranged in the longitudinal direction, each bore (32) being capable of permitting the passage of fixing means of the screw-nut type so as to ensure the fixing of said fixing bar (30) to said structural frame (1),
- a plurality of through-housings (31) for receiving made in said bar (30), extending in a direction perpendicular to said longitudinal direction, each receiver housing (31) having a straight cross section which is shaped and conjugate with the straight cross section of the rails (21) of the intermediate frame (2) so that each housing (31) for receiving each bar (30) may receive at least one rail (21).

10. A device according to claim 9, **characterized in that** at least one fixing bar (30) - in particular each fixing bar - comprises at least one bridging part (34) capable of being housed on at least one portion of said fixing bar (30) in order to prevent any undesired dislodging of the rails (21) from the receiver housings (31).

11. A device according to one of claims 9 or 10, **characterized in that** at least one fixing bar (30) - in particular each fixing bar - comprises a projection (33) made in at least one housing (31) for receiving said bar (30) so as to fill the production tolerances of a rail (21) housed in said receiver housing (31) and said fixing bar (30).

12. A device according to one of claims 1 to 11, **characterized in that** said non-dimensioning equipment is selected from equipment of an electrical network, equipment of a pneumatic network, equipment of a hydraulic network, and equipment of a mixed electrical, pneumatic and hydraulic network.

13. A device according to one of claims 1 to 12, **characterized in that** each fixing holder (4) comprises means of identification of the assembling site of the intermediate frame (2) where said fixing holder (4) has to be positioned.

14. An aircraft comprising an aircraft airframe, **characterized in that** said aircraft airframe comprises:
- a plurality of fixing sites uniformly distributed over said airframe, each fixing site being capable of receiving fixing means for a rigid attachment clamp (3) for a mounting device according to one of claims 1 to 13, so as to be able to ensure the fixing of said attachment clamp (3) to said airframe,
- at least one mounting device for non-dimensioning equipment according to one of claims 1 to 13, said mounting device being fixed rigidly to said airframe in the region of at least one fixing site.

15. A method for mounting non-dimensioning equipment on a structural frame of a vehicle, known as the structural frame (1), **characterized in that**:
- fixing sites are made on said structural frame (1) of the vehicle and uniformly distributed over said frame (1), each fixing site being capable of receiving at least one attachment clamp (3),
- rigid attachment clamps (3) are fixed to said structural frame (1) in the region of a set of fixing sites, each attachment clamp (3) being capable of receiving a portion of an intermediate frame (2) and maintaining the same rigidly in order to prevent any undesired movement of said intermediate frame (2) portion relative to the structural frame (1),
- a rigid intermediate frame (2) is arranged opposite said structural frame (1) and portions of said intermediate frame (2) are housed in said attachment clamps (3), said intermediate frame (2) comprising a set of rigid assembling sites for a fixing holder (4) on said intermediate frame (2),
- fixing holders (4) are assembled to said intermediate frame (2) in the region of a set of said assembling sites, each fixing holder (4) comprising a clip returned elastically to the clamping position, known as the resilient clip, capable of permitting the fixing of said support to the intermediate frame, the fixing holder bearing at least one fixing (6) for at least one piece of non-dimensioning equipment,
- non-dimensioning equipment is housed in said fixings (6) borne by said fixing holders (4).

## Patentansprüche

1. Vorrichtung zur Montage von dimensionslosen Elementen (5) auf dem Fahrgestell (1) eines Fahrzeuges, wobei die besagte Vorrichtung folgende Teile umfaßt:
- eine Mehrzahl von Befestigungen (6) von mindestens einem dimensionslosen Element (5), wobei jede Befestigung (6) geeignet ist, mindestens einen Abschnitt eines dimensionslosen Elements (5) aufzunehmen und zu halten,
- eine zwischenliegende starre Tragkonstruktion (2), die eine Mehrzahl von Stellen für die starre Montage von mindestens einem Träger (4) der Befestigung an dieser zwischenliegenden Tragkonstruktion (2) umfaßt,
- eine Mehrzahl von Trägern (4) der Befestigung, von denen jeder mindestens eine Befestigung (6) trägt und eine Klammer umfaßt, die elastisch in Klemmposition betätigt wird, eine sogenannte elastische Klammer (40), die geeignet ist, die Fixierung dieses Trägers (4) der Befestigung an einer beliebigen Stelle für die starre Montage zuzulassen,
- eine Mehrzahl von Flanschen (3) zur starren Fixierung der besagten zwischenliegenden Tragkonstruktion (2) auf dem besagten Fahrgestell (1) des Fahrzeugs, wobei jeder Befestigungsflansch (3) auf dem Fahrgestell (1) starr verankert ist und mindestens einen Abschnitt der zwischenliegenden Tragkonstruktion (2) aufnimmt und sie starr hält, so daß jegliche ungewollte Verschiebung dieses Abschnitts der zwischenliegenden Tragkonstruktion (2) gegenüber dem Fahrgestell (1) verhindert wird.

2. Vorrichtung nach Anspruch 1, **dadurch gekennzeichnet, daß** die besagte zwischenliegende Tragkonstruktion (2) eine Mehrzahl Schienen (21) zur Aufnahme der besagten Träger (4) der Befestigung umfaßt, wobei jede Schiene (21) zur Aufnahme geeignet ist mindestens einen Träger an jedem Punkt der Schiene (21) starr aufzunehmen.

3. Vorrichtung nach Anspruch 2, **dadurch gekennzeichnet, daß** zumindest eine Schiene (21) der besagten zwischenliegenden Tragkonstruktion (2) - insbesondere jede Schiene der besagten zwischenliegenden Tragkonstruktion (2) nicht symmetrisch in Umdrehung ist.

4. Vorrichtung nach Anspruch 3, **dadurch gekennzeichnet, daß** zumindest eine Schiene (21) der besagten zwischenliegenden Tragkonstruktion (2) - insbesondere jede Schiene der besagten zwischenliegenden Tragkonstruktion einen geraden Querschnitt aufweist, dessen periphere Kontur polygonal - insbesondere quadratisch - ist.

5. Vorrichtung nach Anspruch 4, **dadurch gekennzeichnet, daß** die besagte elastische Klammer (40) eines Trägers (4) der Befestigung zwei elastisch flexible Wände (41, 42) parallel zueinander und im Abstand voneinander um eine leicht kleinere Dimension als die Dimension einer Seite des Quadrats des geraden Querschnitts einer Schiene (21) mit geradem quadratischem Querschnitt umfaßt, so daß dieser Träger (4) der Befestigung die Schiene (21) an jedem Punkt der Schiene (21) klemmen und jegliche ungewollte Verschiebung des Trägers (4) der Befestigung die Schiene (21) entlang nach seiner Fixierung auf letzterer verhindern kann.

6. Vorrichtung nach einem beliebigen der vorstehenden Ansprüche 2 bis 5, **dadurch gekennzeichnet, daß** zumindest ein Träger (4) der Befestigung - insbesondere jeder Träger der Befestigung - ein Verschlußeisen (44) umfaßt, das geeignet ist, die elastische Klammer (40) dieses Trägers (4) der Befestigung abzudecken, so daß dieser Träger (4) der Befestigung die Schiene (21) ganz einspannen kann, auf der er fixiert ist, und er somit jegliches Abspringen dieses Trägers (4) der Befestigung von der Schiene (21) verbietet.

7. Vorrichtung nach einem beliebigen der vorstehenden Ansprüche 2 bis 6, **dadurch gekennzeichnet, daß** die besagte zwischenliegende Tragkonstruktion (2) Schienenanschlüsse (7) umfaßt, die geeignet sind, zwei anstoßende Schienen (21) starr miteinander zu verbinden.

8. Vorrichtung nach einem beliebigen der vorstehenden Ansprüche 2 bis 7, **dadurch gekennzeichnet, daß** zumindest eine Befestigung (6) von zumindest einem dimensionslosen Element (5) - insbesondere jede Befestigung - einen Zapfen umfaßt, der eine Form und Abmessungen aufweist, die das Gegenstück zur Form und den Abmessungen von zumindest einem Zapfenloch bilden, das in mindestens einem Träger (4) der Befestigung - insbesondere jedem Träger der Befestigung - ausgebildet ist, so daß er in diesem Träger (4) der Befestigung durch Einsetzen des besagten Zapfens in das besagte Zapfenloch aufgenommen und von letzterem starr gehalten werden kann.

9. Vorrichtung nach einem beliebigen der vorstehenden Ansprüche 2 bis 8, **dadurch gekennzeichnet, daß** zumindest ein Befestigungsflansch (3) - insbesondere jeder Befestigungsflansch - der besagten zwischenliegenden Tragkonstruktion (2) auf dem besagten Fahrgestell (1) des Fahrzeugs ein starres Bindeblech (30) umfaßt, das sich entlang einer Richtung, der sogenannten Längsrichtung, erstreckt und folgendes umfaßt:
- eine Reihe von Bohrlöchern (32), die entlang der Längsrichtung gestaltet sind, wobei jedes Bohrloch (32) geeignet ist, den Durchgang von Befestigungsmitteln von der Art Schraube und Schraubenmutter zuzulassen, damit die Befestigung dieses Bindeblechs (30) zur Befestigung auf dem besagten Fahrgestell (1) gewährleistet ist,
- eine Mehrzahl von durchgehenden Aufnahmen (31), die im besagten Bindeblech (30) gestaltet sind und sich entlang einer senkrecht zur besagten Längsrichtung verlaufenden Richtung erstrecken, wobei jede Aufnahme (31) einen geraden Querschnitt aufweist, der das entsprechende Gegenteil zum geraden Querschnitt der Schienen (21) der zwischenliegenden Tragstruktur (2) bildet, so daß jede Aufnahme (31) jedes Bindeblechs (30) zumindest eine Schiene (21) aufnehmen kann.

10. Vorrichtung nach Anspruch 9, **dadurch gekennzeichnet, daß** zumindest ein Bindeblech (30) zur Fixierung - insbesondere jedes Bindeblech zur Fixierung - zumindest einen Schieber (34) umfaßt, der geeignet ist, sich auf zumindest einen Abschnitt des besagten Bindeblechs (30) zur Befestigung zu setzen, um jegliches ungewollte Abspringen der Schienen (21) von den Aufnahmen (31) zu verhindern.

11. Vorrichtung nach einem beliebigen der vorstehenden Ansprüche 9 oder 10, **dadurch gekennzeichnet, daß** zumindest ein Bindeblech (30) zur Fixierung - insbesondere jedes Bindeblech zur Fixierung - einen Buckel (33) umfaßt, der in zumindest einer Aufnahme (31) dieses Bindeblechs (30) gestaltet ist, so daß die Fertigungstoleranzen einer Schiene (21) ausgefüllt werden, die in dieser Aufnahme (31) und diesem Bindeblech (30) zur Fixierung aufgenommen ist.

12. Vorrichtung nach einem beliebigen der vorstehenden Ansprüche 1 bis 11, **dadurch gekennzeichnet, daß** die besagten dimensionslosen Elemente unter den Elementen eines Stromnetzes, den Elementen eines Druckluftnetzes, den Elementen eines Hydrauliknetzes und den Elementen eines gemischten Netzes mit Strom, Druckluft, Hydraulik gewählt werden.

13. Vorrichtung nach einem beliebigen der vorstehenden Ansprüche 1 bis 12, **dadurch gekennzeichnet, daß** jeder Träger (4) der Befestigung Erkennungsmittel des Montageorts der zwischenliegenden Tragkonstruktion (2) umfaßt, wo dieser Träger (4) der Befestigung positioniert werden muß.

14. Luftfahrzeug, das eine Luftfahrzeugzelle umfaßt, **dadurch gekennzeichnet, daß** die besagte Luftfahrzeugzelle folgendes umfaßt:
- eine Mehrzahl von Fixierstellen, die gleichmäßig auf der besagten Zelle verteilt sind, wobei jede Fixierstelle geeignet ist, Fixiermittel eines starren Befestigungsflansches (3) einer Vorrichtung zur Montage nach einem beliebigen der vorstehenden Ansprüche 1 bis 13 aufzunehmen, so daß die Fixierung dieses Befestigungsflansches (3) auf der besagten Zelle gewährleistet ist,
- zumindest eine Vorrichtung zur Montage von dimensionslosen Elementen nach einem beliebigen der vorstehenden Ansprüche 1 bis 13, wobei die besagte Vorrichtung zur Montage an der besagten Zelle an zumindest einer Fixierstelle starr fixiert ist.

15. Verfahren zur Montage von dimensionslosen Elementen auf dem Fahrgestell eines Fahrzeuges, dem sogenannten Fahrgestell (1),
**dadurch gekennzeichnet, daß**:
- Fixierstellen auf dem besagten Fahrgestell (1) des Fahrzeugs gestaltet und gleichmäßig auf diesem Fahrgestell (1) verteilt sind, wobei jede Fixierstelle geeignet ist, zumindest einen Befestigungsflansch (3) aufzunehmen,
- Flansche (3) zur starren Befestigung am besagten Fahrgestell (1) an einer Reihe von Fixierstellen fixiert sind, wobei jeder Befestigungsflansch (3) geeignet ist, einen Abschnitt einer zwischenliegenden Tragkonstruktion (2) aufzunehmen und sie starr zu halten, so daß jegliche ungewollte Verschiebung dieses Abschnitts der zwischenliegenden Tragkonstruktion (2) gegenüber dem Fahrgestell (1) verhindert wird,
- eine zwischenliegende starre Tragkonstruktion (2) gegenüber dem besagten Fahrgestell (1) gestaltet ist und Abschnitte dieser zwischenliegenden Tragkonstruktion (2) in den besagten Befestigungsflanschen (3) aufgenommen sind, wobei die besagte zwischenliegende Tragkonstruktion (2) eine Reihe von Stellen für die starre Befestigung eines Trägers (4) der Befestigung an der besagten zwischenliegenden Tragkonstruktion (2) umfaßt,
- Träger (4) der Befestigung an der besagten zwischenliegenden Tragkonstruktion (2) an einer Reihe der besagten Montagestellen montiert sind, wobei jeder Träger (4) der Befestigung eine elastisch betätigte Klammer in Spannposition umfaßt, eine sogenannte elastische Klammer, die geeignet ist, die Befestigung dieses Trägers auf der zwischenliegenden Tragkonstruktion zuzulassen, wobei der Träger der Befestigung zumindest eine Befestigung (6) von zumindest einem dimensionslosen Element trägt,
- dimensionslose Elemente in den besagten Befestigungen (6) aufgenommen sind, die von den besagten Trägern (4) der Befestigung getragen werden.
